**Europäisches Patentamt**

**European Patent Office**

**Office européen des brevets**

(19)

(11) Veröffentlichungsnummer: **0 258 786**
**B1**

(12) # EUROPÄISCHE PATENTSCHRIFT

(45) Veröffentlichungstag der Patentschrift:
06.06.90

(21) Anmeldenummer: **87112308.9**

(22) Anmeldetag: **25.08.87**

(51) Int. Cl.⁵: **C09C 1/36,** C01G 23/08,
C22B 34/12, C01B 13/14

(54) **Verfahren zur Herstellung von Titandioxidpigmenten.**

(30) Priorität: **05.09.86 DE 3630220**

(43) Veröffentlichungstag der Anmeldung:
**09.03.88 Patentblatt 88/10**

(45) Bekanntmachung des Hinweises auf die Patenterteilung:
**06.06.90 Patentblatt 90/23**

(84) Benannte Vertragsstaaten:
**BE DE GB**

(56) Entgegenhaltungen:
**RESEARCH DISCLOSURE, Nr. 202, Februar 1981,
Seiten 101-102, Zusammenfassung Nr. 20247, Havant
Hampshire, GB; "Clean gas from coal replaces
distillate oil"**

(73) Patentinhaber: **BAYER AG,**
**D-5090 Leverkusen 1 Bayerwerk(DE)**

(72) Erfinder: **Lailach, Günter, Dr., Bodelschwinghstrasse 23,
D-4150 Krefeld(DE)**
Erfinder: **Schultz, Karl-Heinz, Dr., Deswatinesstrasse 61,
D-4150 Krefeld(DE)**

## Beschreibung

Die Erfindung betrifft ein Verfahren zur Herstellung von Titandioxidpigmenten.

Die Herstellung von Titandioxidpigmenten erfolgt nach dem Sulfatverfahren und dem Chloridverfahren.

Das Sulfatverfahren beruht auf dem Aufschluß von titanhaltigen Rohstoffen mit Schwefelsäure. Aus der entstehenden Lösung wird Titandioxidhydrat durch Hydrolyse gefällt. Nach Entfernen von Verunreinigungen wird das Hydrolysat kalziniert und gemahlen. Die Kalzinierung erfolgt vornehmlich in Drehrohröfen. Das Beheizen der Drehrohröfen erfolgt mit Heizöl oder Erdgas und erfordert einen hohen Energieaufwand.

In der Druckschrift "Research Disclosure, Nr. 202, Feb. 1981, Seiten 101–102, Zusammenfassung Nr. 20247, Havant Hampshire, GB" wird die Herstellung von Titandioxidpigmenten nach dem Sulfatverfahren, insbesondere die Kalzinierung beschrieben. Dabei wird bei der Kalzinierung zur Erzeugung der erforderlichen Wärme anstatt Erdöldestillat, Erdgas oder ähnliche Brennstoffe zu verbrennen Generatorgas verbrannt, das vorher in einem ökonomischen Verfahren aus Kohle hergestellt wurde. Die Qualität der so kalzinierten Pigmente wird nicht beeinträchtigt.

Beim Chloridverfahren wird aus titanhaltigen Rohstoffen durch Chlorierung unter reduzierenden Bedingungen bei 100 bis 1200°C Titantetrachlorid gewonnen. Dabei dient Petrolkoks als Reduktionsmittel.

Nach der Abtrennung von aus Verunreinigungen der Rohstoffe gebildeten Chloriden wird Titantetrachlorid bei Temperaturen von 900-1400°C zu Titandioxidpigment verbrannt.

Die nach dem Sulfat- oder Chloridverfahren erhaltenen Titandioxidpigmente werden in der Regel anorganisch und/oder organisch nachbehandelt.

Bei der anorganischen Nachbehandlung werden Oxide, Oxidhydrate, Silicate und/oder Phosphate zumeist aus wäßriger Lösung auf das in Wasser suspendierte Titandioxidpigment abgeschieden.

Anschließend werden die Titandioxidpigmente abfiltriert, getrocknet und mikronisiert. Vor der Mikronisierung oder schon vor der Trocknung erfolgt in den meisten Fällen eine organische Nachbehandlung mit Dispergiermitteln wie Siliconen, Aminen, Phosphorsäureestern und organischen Säuren.

Die Trocknung der nachbehandelten Titandioxidpigmente erfolgt vorteilhaft in Sprüh- oder Spinflash-Trocknern, wobei die benötigte Energie in der Regel durch Verbrennen von Erdgas oder Heizöl aufgebracht wird.

Bei der Herstellung von Titandioxidpigmenten nach dem Chloridverfahren fallen bei der Chlorierung der titanhaltigen Rohstoffe Reaktionsgase an, die außer Titantetrachlorid staubförmige Teilchen der festen Rohstoffe, Chloride der Nebenbestandteile der titanhaltigen Roh stoffe und vor allem Kohlenmonoxid und Kohlendioxid enthalten. Der Kohlenmonoxidanteil der Reaktionsgase liegt in der Regel bei 40 bis 80 %. In geringen Mengen können außerdem Chlor, Siliciumtetrachlorid, Phosgen, Chlorwasserserstoff, Schwefelchloride und Schwefelkohlenstoff enthalten sein.

Nach der Abscheidung der Stäube und der schwerflüchtigen Metallchloride und nach der Kondensation des Titantetrachlorids durch Kühlen der Gase auf Temperaturen nahe oder unter 0°C resultiert ein Abgasgemisch, das neben hohen Anteilen an Kohlenmonoxid noch geringe Mengen Chlor, Titantetrachlorid und andere leicht flüchtige Verbindungen enthält. Chlor und Titantetrachlorid werden in der Regel durch eine Wäsche entfernt, wonach das Abgas noch Spuren von Chlor und Metallchloriden enthält.

Wegen des hohen Kohlenmonoxidgehaltes kann das Abgas jedoch nicht direkt in die Atmosphäre abgeleitet werden, sondern das Kohlenmonoxid muß vor der Emmission verbrannt werden. Das geschieht üblicherweise unter Zuhilfenahme einer mit Erdgas oder Heizöl betriebenen Stützflamme.

Die Aufgabe der Erfindung bestand darin, ein besonders vorteilhaftes Verfahren zur Herstellung von Titandioxidpigmenten bereitzustellen. Insbesondere bestand die Aufgabe, den hohen Erdgas- und Heizölbedarf bei der titandioxidpigmentherstellung zu reduzieren und somit deren Wirtschaftlichkeit zu verbessern.

Überraschenderweise wurde nun gefunden, daß bei Trocknungs- und/oder Kalzinierprozessen während der Herstellung von Titandioxidpigmenten kohlenmonoxidhaltige Abgase, die bei der Herstellung von Titantetrachlorid nach dem Chloridverfahren anfallen, als Heizgase eingesetzt werden können.

Die Erfindung betrifft somit ein Verfahren zur Herstellung von Titandioxidpigmenten, welches dadurch gekennzeichnet ist, daß bei dessen Trocknungs- und/oder Kalzinierprozessen kohlenmonoxidhaltige Abgase, die bei der Herstellung von Titantetrachlorid nach dem Chloridverfahren anfallen, als Heizgas eingesetzt werden.

Das erfindungsgemäße Verfahren wird vorzugsweise bei der Herstellung von Titandioxidpigmenten nach dem Chloridverfahren angewendet.

Aber auch bei der Herstellung von Titandioxidpigmenten nach dem Sulfatverfahren zeigt das erfindungsgemäße Verfahren überraschenderweise große Vorteile.

In einer Ausführungsform des erfindungsgemäßen Verfahrens werden die Abgase bei der Trocknung von nachbehandelten Titandioxidpigmenten eingesetzt. Vorzugsweise erfolgt der Einsatz der Abgase bei der Trocknung des Filterkuchens, der bei einer Filtration von anorganisch nachbehandelten Titandioxidpigmenten aus einer wäßrigen Suspension anfällt. Es ist dabei vorteilhaft, die Abgase vor dem Einsatz als Heizgas soweit zu reinigen, so daß die Qualität der Titandioxidpigmente nicht beeinträchtigt wird.

Wenn Titandioxidpigmente nach dem Chloridverfahren und nach dem Sulfatverfahren am gleichen Ort produziert werden, können die Abgase vorteilhaft bei der Kalzinierung des beim Sulfatverfahren anfallenden Hydrolysats eingesetzt werden.

In einer bevorzugten Variante des erfindungsgemäßen Verfahrens werden 10-90 % der bei der Trocknung der nachbehandelten Titandioxidpigmente und bei der Kalzinierung des nach dem Sulfatverfahren anfallenden Hydrolysats benötigten Heizenergie durch Verbrennen von Erdgas oder Heizöl aufgebracht, um eine sichere und stabile Verbrennung des Kohlenmonoxids der Abgase zu gewährleisten.

Durch Anwendung des erfindungsgemäßen Verfahrens können bei der Herstellung von Titandioxidpigmenten große Teile der bei Trocknungs- und Kalzinierprozessen benötigten Energie aufgebracht werden. Dadurch kann die Wirtschaftlichkeit der Ttiandioxidpigmentherstellung sowohl nach dem Chloridverfahren als auch nach dem Sulfatverfahren bei gleichbleibender Pigmentqualität deutlich verbessert werden.

Die Vorteile des erfindungsgemäßen Verfahrens sollen durch ein Beispiel verdeutlicht werden, ohne daß dadurch der Erfindungsgedanke eingeschränkt werden soll.

Beispiel

Das Abgas der Titantetrachloridherstellung durch Chlorierung von Rutilsand in Gegenwart von Petrolkoks bei 980°C enthielt nach Abtrennung von Stäuben und festen Metallchloriden und nach einer alkalischen Wäsche 57 Vol.-% Kohlenmonoxid, 34 Vol.-% Kohlendioxid, 6 Vol.-% Wasserdampf, 3 Vol.-% $N_2$ und 12 Vol.-ppm Gesamt-Chlor. Pro Tonne produziertes Titantetrachlorid fielen 260 m³ dieses Abgases an (alle Angaben für die Gasmengen beziehen sich auf Standardbedingungen).

Das Titantetrachlorid wurde auf bekannte Weise zu Titandioxidpigment verbrannt. Nach einer anorganischen Nachbehandlung des Pigmentes wurde ein Filterkuchen mit 49 Gew.-% Trockensubstanz erhalten. Dessen Trocknung in einem Spin-flash-Trockner benötigte normalerweise 125 m³ Erdgas (Heizwert: 32.000 kJ/m³) je Tonne TiO₂-Pigment. Erfindungsgemäß wurden 570 m³ des gereinigten Abgases zusammen mit 15 m³ Erdgas pro Tonne Titandioxidpigment verbrannt und die Rauchgase in den Trockner eingespeist. Durch den Ersatz des überwiegenden Teiles des Erdgases durch das Abgas traten keine Nachteile auf. Etwa 10% des anfallenden Abgases konnten nicht genutzt werden. Es konnten also 110 m³ Erdgas pro Tonne hergestelltes Titandioxidpigment eingespart werden.

Patentansprüche

1. Verfahren zur Herstellung von Titandioxidpigmenten, dadurch gekennzeichnet, daß bei dessen Trocknungs- und/oder Kalzinierprozessen kohlenmonoxidhaltige Abgase, die bei der Herstellung von Titantetrachlorid nach dem Chloridverfahren anfallen, als Heizgas eingesetzt werden.

Verfahren nach Anspruch 1, dadurch gekennzeichnet, daß die Herstellung der Titandioxidpigmente nach dem Sulfatverfahren erfolgt.

3. Verfahren nach Anspruch 1, dadurch gekennzeichnet, daß die Herstellung der Titandioxidpigmente nach dem Chloridverfahren erfolgt.

4. Verfahren nach einem oder mehrerer der Ansprüche 1 bis 3, dadurch gekennzeichnet, daß die Abgase bei der Trocknung von nachbehandelten Titandioxidpigmenten eingesetzt werden.

5. Verfahren nach einem oder mehrerer der Ansprüche 1 bis 4, dadurch gekennzeichnet, daß die Abgase bei der Trocknung des Filterkuchens eingesetzt werden, der bei einer Filtration anorganisch nachbehandelter Titandioxidpigmente aus einer wäßrigen Suspension anfällt.

6. Verfahren nach Anspruch 2, dadurch gekennzeichnet, daß die Abgase bei der Kalzinierung des beim Sulfatverfahren anfallenden Hydrolysats eingesetzt werden.

7. Verfahren nach einem oder mehrerer der Ansprüche 1 bis 6, dadurch gekennzeichnet, daß 10 bis 90 % der benötigten Heizenergie durch Verbrennen von Erdgas oder Heizöl gemeinsam mit den Abgasen aufgebracht werden.

**Claims**

1. A process for the production of titanium dioxide pigments, characterized in that offgases containing carbon monoxide which accumulate in the production of titanium tetrachloride by the chloride process are used as heating gas in the drying and/or calcination steps of the process.

2. A process as claimed in Claim 1, characterized in that the titanium dioxide pigments are produced by the sulfate process.

3. A process as claimed in Claim 1, characterized in that the titanium dioxide pigments are produced by the chloride process.

4. A process as claimed in one or more of Claims 1 to 3, characterized in that the offgases are used in the drying of aftertreated titanium dioxide pigments.

5. A process as claimed in one or more of Claims 1 to 4, characterized in that the offgases are used in the drying of the filter cake which accumulates in the filtration of inorganically aftertreated titanium dioxide pigments from an aqueous suspension.

6. A process as claimed in Claim 2, characterized in that the offgases are used in the calcination of the hydrolyzate accumulating in the sulfate process.

7. A process as claimed in one or more of Claims 1 to 6, characterized in that from 10 to 90% of the heating energy required is applied by burning natural gas or fuel oil together with the offgases.

**Revendications**

1. Procédé de préparation de pigments de dioxyde de titane, caractérisé en ce que, lors de ses processus de séchage et/ou de calcination, comme gaz de chauffage, on utilise des gaz résiduaires se formant lors de la préparation de tétrachlorure de titane selon le procédé faisant appel à des chlorures.

2. Procédé selon la revendication 1, caractérisé en ce que la préparation des pigments de dioxyde de titane a lieu selon le procédé faisant appel à des sulfates.

3. Procédé selon la revendication 1, caractérisé en ce que la préparation des pigments de dioxyde de titane a lieu selon le procédé faisant appel à des chlorures.

4. Procédé selon une ou plusieurs des revendications 1 à 3, caractérisé en ce que l'on utilise les gaz résiduaires se formant lors du séchage des pigments de dioxyde de titane soumis à un traitement ultérieur.

5. Procédé selon une ou plusieurs des revendications 1 à 4, caractérisé en ce qu'on utilise les gaz résiduaires se formant lors du séchage du gâteau de filtre que l'on obtient lors d'une filtration de pigments de dioxyde de titane soumis à un traitement ultérieur inorganique, à partir d'une suspension aqueuse.

6. Procédé selon la revendication 2, caractérisé en ce que l'on utilise les gaz résiduaires se formant lors de la calcination de l'hydrolysat obtenu lors du procédé faisant appel à des sulfates.

7. Procédé selon une ou plusieurs des revendications 1 à 6, caractérisé en ce que, conjointement avec les gaz résiduaires, on applique 10 à 90% de l'énergie calorifique nécessaire par combustion de gaz naturel ou de mazout.